# EUROPEAN PATENT APPLICATION

(11) **EP 1 452 986 A1**
(43) Date of publication of application: **01.09.2004**
(21) Application number: 01979015.3
(22) Date of filing: 05.11.2001
(51) Int. Cl.: G06F 17/60

(54) **SANITARY MEASUREMENT SYSTEM**

(71) Applicant: Daikin Industries, Ltd., Osaka-shi, Osaka 530-8323 (JP)
(72) Inventor: MURATA, Toshimi, c/o Daikin Environmental Lab. LTD, Tsukuba-shi, Ibaraki 305-0841 (JP); AMANO, Yoshihisa, c/o Daikin Environmrntal Lab LTD, Tsukuba-shi, Ibaraki 305-0841 (JP); AKAMATSU, Megumi, c/o Daikin Environmental Lab LTD, Tsukuba-shi, Ibaraki 305-0841 (JP); KATAYAMA, Hideo, c/o Daikin Environmental Lab. LTD, Tsukuba-shi, Ibaraki 305-0841 (JP); ARAI, Junichiro, c/o Daikin Environmental Lab. LTD, Tsukuba-shi, Ibaraki 305-0841 (JP); MIKI, Kenichi, c/o DAIKIN INDUSTRIES, LTD., Osaka-shi, Osaka 530-8323 (JP)
(74) Representative: Goddar, Heinz J., Dr.
(86) International application number: PCT/JP2001/009670
(87) International publication number: WO 2003/040974

(57) **Abstract**

An object of the invention is provide a sanitary measurement system, which can reduce a load relating to sanitary measurement in each food factory.

The sanitary measurement system for registering a plurality of food factories 30, managing sanitary information obtained from the food factories 30 and effectively utilizing the sanitary information, includes a sanitary information managing server 11 and a measuring device 31. The measuring device 31 performs sanitary inspection in each food factory 30, and sends data (sanitary information) formed of a result of the inspection to the sanitary information managing server 11.

## Description

### (Technical Field)

The present invention relates to a sanitary measurement system, and particularly to a sanitary measurement system, which manages and effectively utilizes sanitary information obtained from a plurality of food factories registered in the system.

### (Background Art)

In accordance with spread of convenience stores and establishment of low-temperature transportation in distribution industry, use of processed food has been rapidly increasing. Also, use of processed food in food-service industry has also been increasing for reducing cooking times and kitchen spaces in restaurants or stores.

Such processed food is produced by food factories. In the food factories, various processing is effected on fresh food materials transported from places of production, and processed food thus produced is transported to convenience stores, stores of food-service industries and supermarkets. For ensuring freshness and safety, transportation manners such as low-temperature transportation and chilled transportation are often employed when transporting food materials from the places of production to the food factories, and transporting the processed food from the food factories to the stores or shops. Also, each store is equipped with refrigerating facilities and freezing facilities for ensuring the safety of the processed food.

In each food factories, sanitary measurement such as bacteria inspection is performed for ensuring the safety of food materials and processed food. In large food factories, a staff dedicated to the bacteria measurement performs the sanitary measurement every day. However, medium and small food factories outsource the sanitary measurement because a time from processing to consumption is short.

For example, in a conventional manner, samples or specimens are prepared from food materials of a packed lunch and saline, and is diluted with three kinds of (zero, ten and hundred parts of) diluents. After cultivation for 48 hours, a colony count of bacteria is measured with eyes, and the number of bacteria is recorded. In this manner, the bacteria inspection is performed.

As described above, sanitary measurement such as bacteria inspection has been performed in food factories for ensuring the safety of processed food. In accordance with recent increase in use of the processed food, the safety of food is of increasing importance. However, with increase in frequency of use of the processed food, such processed food is decreasing that is consumed in a narrow area within a short time, and such processed food is increasing that is distributed over a large area, and is eaten after a long time. With increase in distribution area, number of articles, amount and time before consumption of the processed food, the importance of safety of the food has been increasing, and it is now required to execute the sanitary measurement more strictly.

Some kinds of food materials have been procured from neighboring farms, and frozen materials delivered from abroad have been also used. In addition to these materials, refrigerated materials, raw or unprocessed materials and half-processed materials, which are delivered from abroad, are increasing.

Under these circumstances, food factories are now required to execute the sanitary measurement more strictly and effectively. However, such measurement requires, e.g., a dedicated person for monitoring results of the measurement, and thus is expensive. Further, it is necessary to decide appropriate methods for determining results of measurement executed on various food materials and processed foods, and to develop appropriate methods of cooking for new food materials and newly developed processed foods. These further increase the cost and time.

### SUMMARY OF THE INVENTION

An object of the invention is to provide a sanitary measurement system, which can reduce a load relating to the sanitary measurement in each food factory.

According to claim 1, a sanitary measurement system for registering a plurality of food factories, managing sanitary information obtained from the food factories and effectively utilizing the sanitary information, includes a sanitary information managing computer and a sanitary inspection device. The sanitary inspection device performs sanitary inspection in each of the food factories, and sends sanitary information formed of a result of the information to the sanitary information managing computer.

This system reduces loads on operations such as sanitary inspection and management of sanitary information formed of results of the inspection, which are conventionally performed in each individual food factory. Owing to such reduction, the sanitary information managing computer centralizes the sanitary information of the respective food factories. Thus, the sanitary inspection device performing the sanitary inspection in each food factory sends the sanitary information to the sanitary information managing computer.

Thereby, each food factory is not required to perform the management of sanitary information (results of sanitary inspection) and determination of the sanitary inspection results in contrast to the conventional method, and the sanitary information managing computer can manage the sanitary information and can determine the results of the sanitary inspection. Since the sanitary information managing computer collects and manages the sanitary information provided from the plurality of food factories, it is possible to perform efficiently the operations such as management and determination of the results of sanitary inspection.

The sanitary information managing computer may be configured to handle the sanitary information of each food factory based on a uniform criterion of determination. Thereby, it is possible to satisfy a request or demand for crisis management relating to food poisoning. In groups such as a food-sales chain having a plurality of food factories under it, the above system can be conveniently used to increase the safety of products handled by the groups.

The sanitary inspection device may be a device counting the number of bacteria, a device measuring a degree of freshness of food, a device measuring a degree of washing or cleaning of food and/or processing devices and tools, a device of measuring a degree of clarification of industrial wastewater, or a device performing various kinds of sanitary inspection in the food or the factory.

According to claim 2, the sanitary measurement system according to claim 1 further has such a feature that the sanitary information managing computer is connected to the sanitary inspection device over the Internet.

Since the system utilizes the Internet for connecting the sanitary information managing computer and the sanitary inspection device, each food factory can send the sanitary information from the sanitary inspection device to the sanitary information managing computer over the telephone or the like without employing additional facilities. Further, the food factories can easily and rapidly obtain required sanitary information, results of the determination of sanitary information, criteria of the determination of sanitary information and others from the sanitary information managing computer via the sanitary inspection device connected to the sanitary information managing computer over the Internet or via another computer.

According to claim 3, the sanitary measurement system according to claim 1 or 2 further has such a feature that the sanitary information formed of the results of inspection by the sanitary inspection device is results of sanitary inspection of products handled in the food factory. The sanitary information managing computer manages the sanitary information by storing the sanitary information at least in a database created on a factory-by-factory basis, a database created on a product-by-product basis and a database prepared on a material-by-material basis related to food materials contained in the products.

In this system, the sanitary information managing computer manages the sanitary information, which is formed of results of sanitary inspection of the products handled in the food factory, by storing the sanitary information in the database created on the factory-by-factory basis, the database created on the product-by-product basis or the database created on the material-by-material basis related to the respective food materials contained in the corresponding products. To each food factory, therefore, the sanitary information managing computer can offer the service of managing the sanitary information obtained from the food factory and providing the results of determination, as well as the service of providing useful information based on the database, which contains the centralized sanitary information obtained from the plurality of food factories, and is created on the product-by-product basis and/or the material-by-material basis. Thus, each food factory can utilize the results of sanitary inspection performed by itself, and further can be indirectly utilize the results of sanitary inspection performed by other factories. Therefore, it is possible to reduce loads, which may be imposed on the sanitary measuring operation to be performed by each factory, and may be imposed on the operations of developing new products or new cooking method by each factory.

According to claim 4, the sanitary measurement system according to claim 3 further has such a feature that the sanitary information managing computer provides sanitary information data in the database to the food factories.

According to claim 5, the sanitary measurement system according to claim 4 further has such a feature that the sanitary information managing computer analyzes the sanitary information data in the database to provide results of the analysis to the food factories.

The system does not only provide the sanitary information data in the database, which is a bundle of the sanitary information collected from the respective food factories, but also offers the service of providing the results of analysis of the sanitary information data to the food factories. To the food factories, the system can provide, e.g., sell-by dates calculated from the sanitary information data, periods of replacement of consumables of the sanitary inspection devices calculated from the sanitary information data of times of executed inspection or the like, contents of sanitary guidance obtained from the sanitary information data, results of problem-prone analysis relating to the food materials and production lines determined from the sanitary information data, and maintenance information of the sanitary inspection device determined from the sanitary information data.

According to claim 6, the sanitary measurement system according to claim 4 or 5 further has such a feature that at least some of the food factories belong to a food-sales company, and the sanitary information managing computer provides the sanitary information data to the food factories via the food-sales company.

This system can supply uniformalized information, which relates to the safety of the food in the respective food factories, to the food-sales company owing these food factories such as headquarters of convenience stores, supermarkets or a restaurant chain. The sanitary information managing computer can provide the sanitary information data to the food factories together with determination prepared by the computer based on its criterion. Also, the sanitary information managing computer can provide the sanitary information data to the food factories together with determination prepared by the criterion of the food-sales company.

According to claim 7, the sanitary measurement system according to any one of claims 3 to 6 further has such a feature that at least some of the food factories belong to a food-sales company having a plurality of stores. The sanitary information managing computer informs the food factories of whether the products can be shipped to the stores or not.

In this system, the sanitary information managing computer collectively manages the sanitary information of the plurality of food factories belonging to the food-sales company, and determines, instead of the respective food factories, whether the food factories can ship the products to the store or not. Therefore, the food-sales company can determine, based on the same criterion, whether the respective food factories can ship the products to the stores or not. The sanitary information managing computer may directly inform the food factory of whether the product can be shipped or not, or may send such information via the food-sales company.

According to claim 8, the sanitary measurement system according to claim 4 or 5 further has such a feature that at least some of the food factories belong to a food-sales company owning a plurality of stores. The sanitary information managing computer provides the sanitary information relating to the products to the stores as well as the food factories.

In this system, the sanitary information managing computer collectively manages the sanitary information of the plurality of food factories belonging to the food-sales company, and provides the sanitary information relating to the products to the respective food factories as well as the stores of the food-sales company. Therefore, the food-sales company can easily assign the sanitary information to the products handled by the stores of the company. For example, it is possible to use sanitary levels determined by the sanitary information managing computer, the food-sales company, an appropriate organization or the like, and sanitary level information such as "AAA" or "AAB" may be assigned to the products. Also, the sanitary information may be added to a product master file of a POS system used in the stores, and may be collectively managed together with other product information.

According to claim 9, the sanitary measurement system according to any one of preceding claims 3 to 8 further has such a feature that the sanitary information managing computer has databases including the sanitary information and created on the food material-by-food material basis and on the cooking method-by-cooking method basis, and provides the data required for product development or trial production to the food factories.

For performing the development of new products or the trial for mass production in the food factories, the food factory can use data held in the sanitary information managing computer, and more specifically can use the data in the database created on the food material-by-food material basis and the database created on the method-by-method basis related to the respective cooking methods.

For example, in a process of producing a trial product in a test kitchen, results of sanitary inspection of ingredients are sent to the sanitary information managing computer, and the computer returns a reply to the effect that ingredients contain many bacteria and thus are rejected. In this case, the food factories can be supplied from the sanitary information managing computer with the data in the database created on the food material-by-food material basis and the database created on the cooking method-by-cooking method basis, and can quickly review the food materials, cooking methods, additives, steps and others.

Based on the database created on the food material-by-food material basis and the database created on the cooking method-by-cooking method basis, the sanitary information managing computer may provide various useful information (e.g., advice for each cooking method, advice for reviewing the production line and advice relating to processing temperature and environment) to the food factories. Such information improves the efficiency of the development or trial of products in the food factories.

The data required for the trial or development of the products can be supplied to the food factories from an operator or the like of the sanitary information managing computer over telephone or facsimile. Also, the sanitary information managing computer may provide web pages protected by the security function on the Internet so that the retrieval or consulting may be performed from or on the databases through the web pages.

According to claim 10, the sanitary measurement system according to any one of the preceding claims 1 to 9 further has such a feature that the sanitary information managing computer estimates a degree of consumption of consumables of the sanitary inspection device based on the sanitary information provided from the sanitary inspection device in the food factories, and advises the food factories to order the consumables.

This system utilizes such an operation that each food factory sends the sanitary information, which is formed of the sanitary inspection results of the sanitary inspection device, to the sanitary information managing computer, and thereby the sanitary information managing computer estimates the degree of consumption of the consumables of the sanitary inspection device. Therefore, the food factories are not required to manage the consumables of the sanitary inspection device by itself, and can determine the timing of required replacement of the consumables from the information provided by the sanitary information managing computer.

Since the sanitary information managing computer advises or guides the appropriate replacement of the consumables of the sanitary inspection device in each food factory, the safety of the food handled in each food factory can be ensured.

### BRIEF DESCRIPTION OF THE DRAWINGS

Fig. 1 is a block diagram of a sanitary measurement system according to an embodiment of the invention.
Fig. 2 illustrates a sanitary guidance by a sanitary information managing server.
Fig. 3 illustrates maintenance of a measuring device and consumables by the sanitary information managing server.
Fig. 4 illustrates information provision by the sanitary information managing server in a process of new product development in food factories.
Fig. 5 illustrates information provision by the sanitary information managing server in a process of mass-production trial in the food factories.
Fig. 6 illustrates a substitutional inspection operation performed by a car equipped with a measuring device for a small-scale food factory.
Fig. 7 illustrates a sanitary measurement system expanded for providing information further to stores of a convenience store chain and consumers.

### DESCRIPTION OF THE PREFERRED EMBODIMENTS

### <Schematic Structure of System>

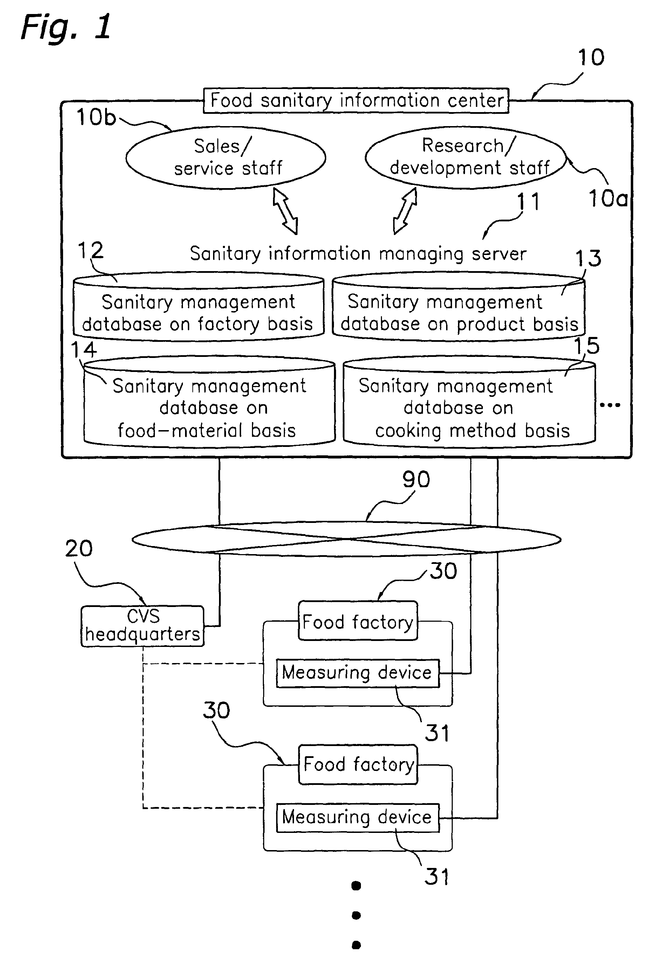

Fig. 1 illustrates a sanitary measurement system according to an embodiment of the invention. According to this sanitary measurement system, a system operator makes a contract with a headquarters 20 of a convenience store chain, which will be referred to as a "CVS headquarters" hereinafter, and a sanitary information managing server 11 operated and managed by the system operator aids sanitary inspection operation in a plurality of food factories 30, which are collectively controlled by the CVS headquarters 20. The system operator has a food sanitary information center 10, in which the sanitary information managing server 11 performs data analysis and data management on results of sanitary inspection in the respective food factories 30, and also provides various useful information to the food factories 30. Each food factory 30 is registered in the food sanitary information center 10 together with an ID code assigned thereto, and the sanitary information managing server 11 receives data of the inspection results including the ID code from a measuring device 31 in each food factory 30.

In the food sanitary information center 10, a research/development staff 10a and a sales/service staff 10b are working for providing information to the respective food factories 30 and others via the sanitary information managing server 11.

### <Food Factories>

The food factories 30 receive fresh food materials from places of production, and processes these food materials in various manners to produce processed foods. The processed foods thus produced are delivered to respective stores of the convenience store chain.

In principle, each food factory 30 is provided with the measuring device 31 for performing sanitary management of food materials, processed foods and others handled in the food factory 30. The measuring device 31 can count the number of bacteria contained in a sample or specimen of food or the like. Various types of devices are available for counting the bacteria, and any one among them can be used as the measuring device 31. The measuring device 31 can provide measured values or measurements, i.e., the results of sanitary inspection as output data.

In each food factory 30, the measuring device 31 counts the bacteria. The measuring device 31 can send the data of measured values to the sanitary information managing server 11 of the food sanitary information center 10 via connection means 90 such as the Internet, telephone, dedicated line, cellular phone or the like. For example, the measuring device 31 may be connected to a telephone line connector in the factory via a personal computer or the like so that the measuring device 31 can be connected to the sanitary information managing server 11 via the connection means 90 such as telephone or the Internet.

The food factories 30 exchange various data to and from the sanitary information managing server 11 in the food sanitary information center 10 via another send/receive device such as a personal computer connected to the measuring device 31 or the sanitary information managing server 11. Information (data) sent from the food factories 30 to the food sanitary information center 10 includes data of measurements, i.e., the results of inspection by the measuring device 31, device information of the measuring device 31 itself, order information for consumables for the measuring device 31, inquiries about the measuring device 31 and/or others. Information sent from the food sanitary information center 10 to the food factories 30 include results (acceptance/rejection) of analysis of the inspection data, sanitary guidance, information relating to the degree of consumption of consumables estimated from the times of executed inspection, upgrade information of software of the measuring device 31, replies to the inquiries sent from the food factories 30 and/or others.

For example, the food factories 30 handle the following foods.

### (Livestock Products)

Meat such as frozen meat and meat products, dairy products such as butter and processed milk, processed broiler chicken and others.

### (Marine Products)

Canned fish, processed seaweed, fish meat products such as fish sausage and fish-paste products, frozen marine products, dried marine products and others.

### (Agricultural Products)

Vegetables, seasonings, sugars, milled rice and flour, bread, sweet stuff, fat and oil, yeast, starch, noodles, koji mold, beans, bean jam, frozen cooked foods, daily dishes, packed lunches, sandwiches, retort foods and others,

### (Beverages, Alcoholic Beverages and Feedstuff)

Carbonated beverages, cooling beverages, fruit wines, beers, sakis, distilled spirits, whiskeys, sweet sakis, mixed feedstuff, unmixed feedstuff and others.

### <Sanitary Information Managing Server>

The sanitary information managing server (sanitary information managing computer) 11 is connected to the measuring device 31 in each food factory 30 over the connection means 90 such as the Internet as illustrated in Fig. 1. The sanitary information managing server 11 collects and analyzes the data of inspection results from the measuring devices 31 for managing the sanitary information according to the plurality of databases. The sanitary information managing server 11 provides various information prepared by the research/development staff 10a and the sales/service staff 10b to the respective food factories 30. For example, web pages for the food factories 30 are prepared on the Internet, and each food factory 30 can receive information and can sent inquiries through the web pages.

The research/development staff 10a can provide upgrade information of software installed in the measuring device 31 of each food factory 30, and can send information as a reply to the inquiry, which was sent from the food factories 30 in connection with the measuring device 31. The sales/service staff 10b can provide the information for replying to the inquiries or the like sent from the food factories 30.

The sanitary information managing server 11 manages the data of results of the sanitary inspection, which are collected from the food factories 30, by processing the data on various bases such as a factory-by-factory basis, a product-by-product basis, a material-by-material basis (i.e., a basis relating to the food materials) and a method-by-method basis (i.e., a basis relating to the cooking methods) and others. More specifically, the sanitary information managing server 11 has a plurality of databases such as sanitary management databases 12, 13, 14 and 15 created on the factory-by-factory basis, product-by-product basis, food material-by-food material basis and cooking method-by-cooking method basis, respectively.

### <CVS Headquarters>

The CVS headquarters 20 generally controls the plurality of food factories 30, and supervises the states of sanitary management in the food factories 30, which provide the food products to the respective stores of the convenience store chain. The CVS headquarters 20 requests the operator of the food sanitary information center 10 to aid in the sanitary management operations in the food factories 30. Also, the CVS headquarters 20 receives information, which are collected and managed by the food sanitary information center 10, such as the sanitary management database 12 created on the factory-by-factory basis, and thereby can provide uniform sanitary guidance to the respective food factories 30.

### <Details of Information Provision by Sanitary Information Managing Server>

### (1: Sanitary Guidance)

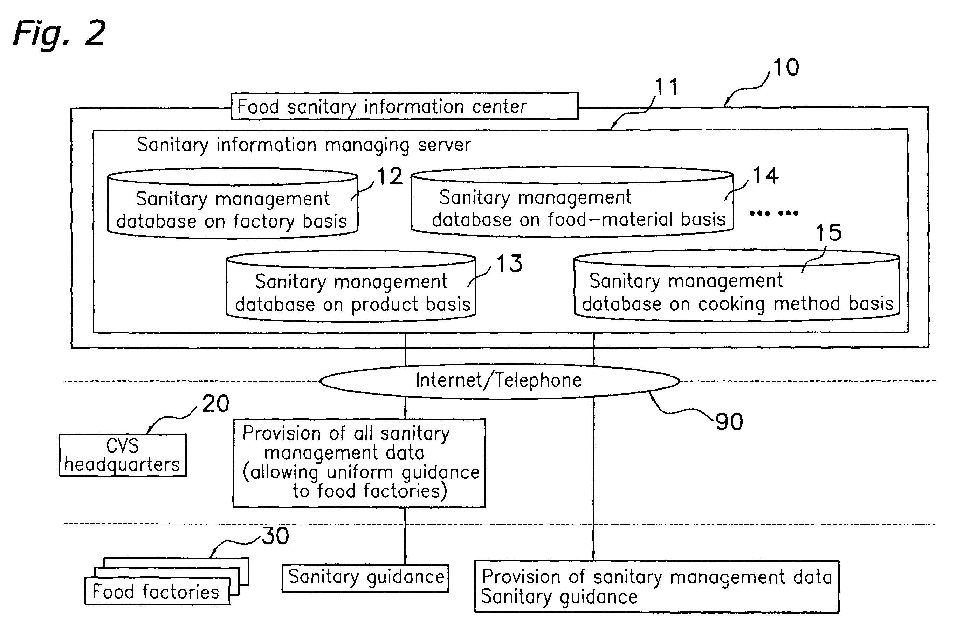

The sanitary information managing server 11 can provide the sanitary guidance to the food factories 30 directly or via the CVS headquarters 20, as illustrated in Fig. 2. For example, according to the sanitary guidance, it is determined whether the inspection results sent from the food factories 30 are in an allowable range or not (allowed or rejected), and provides information such as appropriate processing method (cooking method) if some or many results represent the rejection.

Based on various information collected from the many food factories 30, sanitary information managing server 11 can analyze the tendencies of problems in the food (processed food), food material, production line and others in each food factory 30, and can provide the information and sanitary guidance to the food factories 30. Since the sanitary information managing server 11 collectively performs the data analysis as described above, each food factory 30 can obtain more information useful to the factory.

### (2: Maintenance of Measuring Device and Order of Consumables)

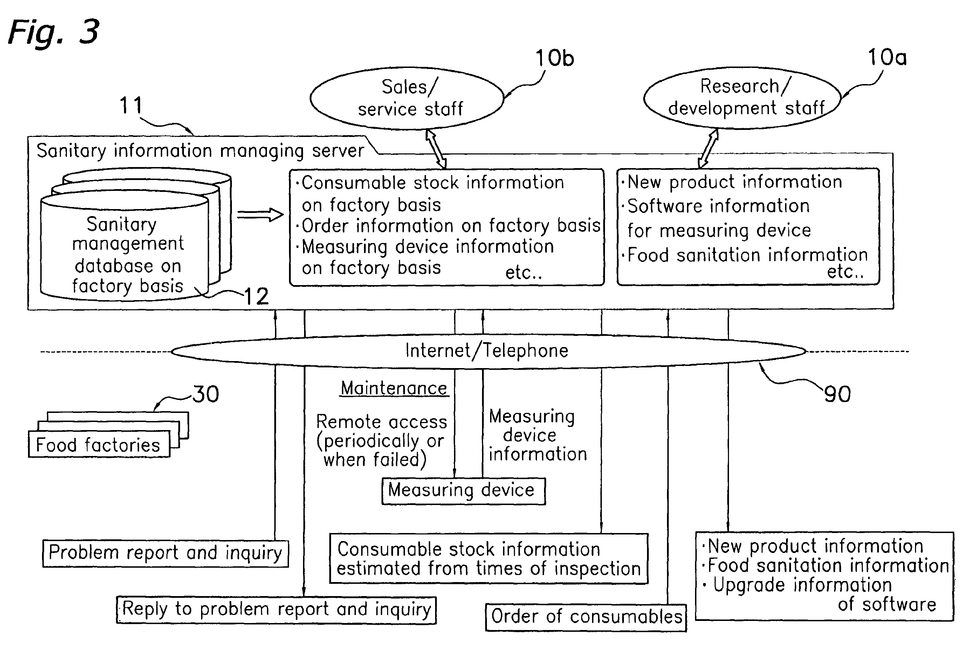

As illustrated in Fig. 3, the sanitary information managing server 11 provides the information to the food factories 30 in response to the requests from the food factories 30, based on estimation performed according to the accumulation of data of inspection results sent thereto.

When the food factories 30 sends a problem report or an inquiry through the web pages on the Internet provided by the sanitary information managing server 11, or through the telephone or facsimile, the food sanitary information center 10 sends a reply to the food factories 30.

Based on the number of data items stored in the sanitary management database 12 created on the factory-by-factory basis as well as various additional information provided from the sales/service staff 10b, the sanitary information managing server 11 estimates the state of the measuring device 31 used in the food factories 30. The sanitary information managing server 11 prepares information files, e.g., of consumable stock information created on the factory-by-factory basis, order information created on the factory-by-factory basis and measuring device information created on the factory-by-factory basis, and periodically performs the maintenance on measuring device 31 by remote access or the like. Also, it requests or prompts the food factories 30 to order the consumables. In response to such request or prompt, the food factories 30 send the device information of the measuring device 31 to the sanitary information managing server 11, or places an order for the consumables.

Further, the sanitary information managing server 11 provides new product information, which is prepared by the research/development staff 10a, as well as software information for the measuring device 31 and food sanitation information to the food factories 30 at appropriate times.

### (3: Information Provision Relating to New Product Development in Food Factories)

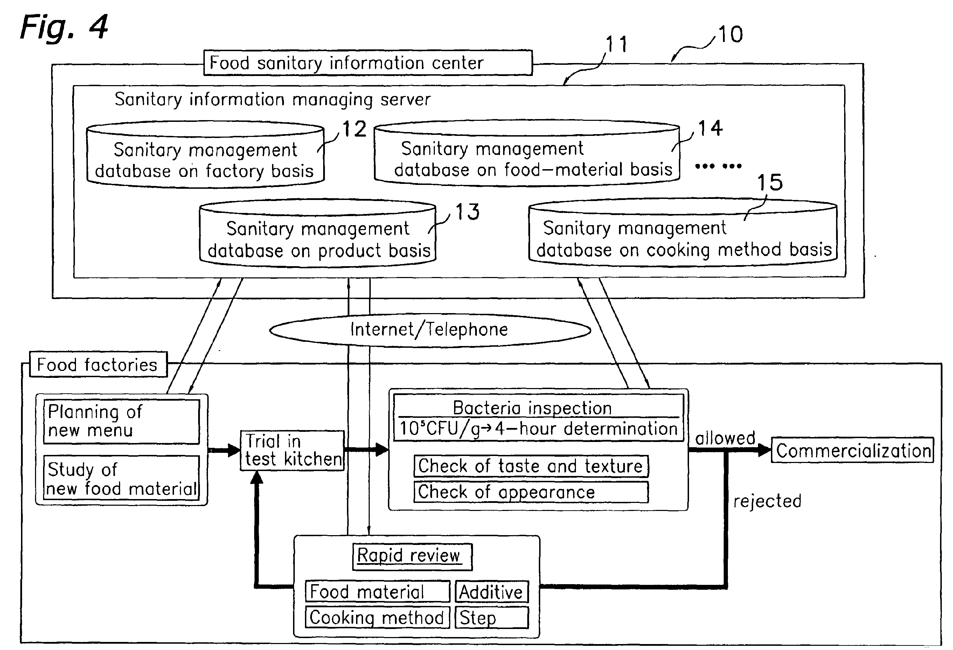

As shown in Fig. 4, the sanitary information managing server 11 can provide information for aiding the food factories 30 in new product development such as planning of new menu and study of new food materials.

In an initial stage of planning the new menu planning or studying new food materials, the food factories 30 can retrieve necessary data in the sanitary management databases 13, 14 and 15, which are created on the product-by-product basis, food material-by- food material basis and cooking method-by-cooking method basis, respectively, and are kept in the sanitary information managing server 11, for referring to and utilizing it. For example, the sanitary information managing server 11 provides the web pages for the food factories 30, and allows retrieving of the data in the respective databases on the web pages. The food factories 30 can access the web pages of the sanitary information managing server 11, e.g., by entering a pass word, and thereby can obtain necessary information. Since the information thus obtained is a part of the information, which has been collected, accumulated and sorted from many food factories 30 for a long term, it has higher quality and reliability than the information locally held in the food factories 30.

In connection with the bacteria inspection of the trial products, the food factories 30 can rapidly receive the results of determination about acceptance/rejection from the sanitary information managing server 11. If the trial product is rejected, the food factories 30 can obtain the data, which can aid in reviewing various points such as food materials, cooking methods, additives and processing steps, from the various databases in sanitary information managing server 11.

### (4: Information Provision in Trial Stage for Mass Production in Food Factories)

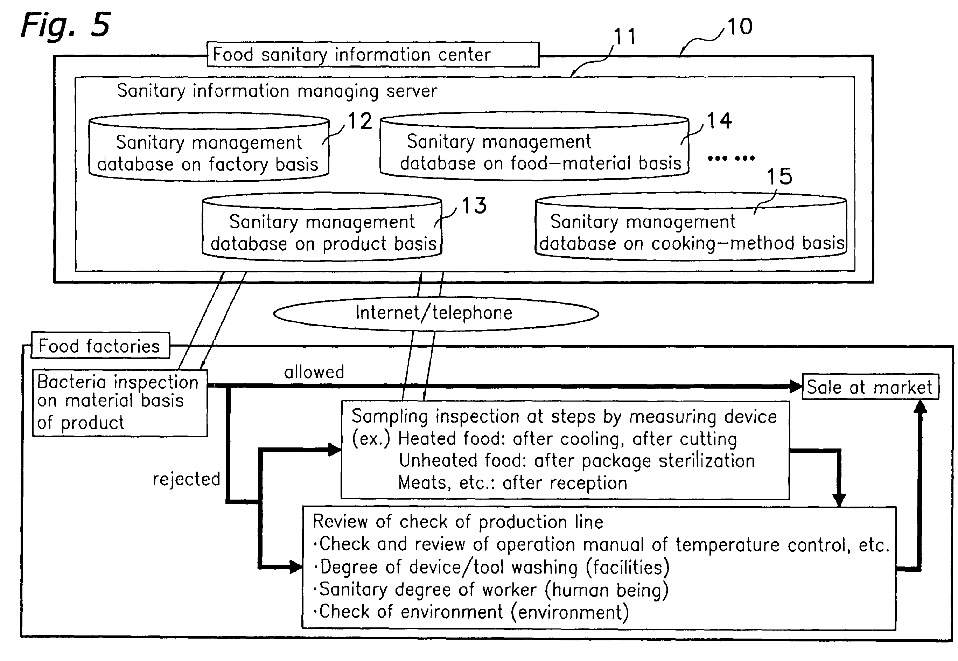

As illustrated in Fig. 5, the sanitary information managing server 11 can provide necessary information to the food factories 30, when required, in connection with the operations of checking new products prepared in a trial stage for mass production (i.e., information relating to the analysis of bacteria inspection and acceptance/rejection determination) as well as the various inspecting and reviewing operations required due to the rejection.

### <Features of the Sanitary Measurement System of the Embodiment>

(1) The system described above is configured to centralize the sanitary information of the respective food factories 30 in the sanitary information managing server 11 for reducing loads on operations such as sanitary inspection and management of the sanitary information (i.e., inspection results), which have been performed in each individual food factories 30 in the prior art. Thus, the measuring devices 31 performing the sanitary inspection in the respective food factories 30 send the data of results of the bacteria inspection to the sanitary information managing server 11.
   Thereby, each food factory 30 is not required to perform individually the management of sanitary information (sanitary inspection results) as well as determination about the inspection results in contrast to the conventional system, and the food sanitary information center 10 can efficiently perform the operations of management and determination about the inspection results.
   Since the sanitary information managing server 11 handles the sanitary information of the respective food factories 30 based on the uniform determination criterion, it is possible to satisfy a request or demand for crisis management relating to food poisoning. The convenience store chain having the plurality of food factories 30 under it can increase the safety of products of the chain by using the system described above.
(2) By connecting the sanitary information managing server 11 and the measuring devices 31 over the Internet, each food factory 30 can send the results of inspection (sanitary information) from the measuring device 31 to the sanitary information managing server 11 over the telephone or the like without preparing dedicated facilities.
(3) The above system does not merely provide the data in the database, which is a bundle of the inspection results collected from the respective food factories 30, to the food factories 30, but offers the service of providing sanitary guidance based on the results analysis of the data. Each food factory 30 can neither perform such analysis nor obtain the data of inspection results of the other factories by its own efforts without difficulty.
   Therefore, the operations and processing by the sanitary information managing server 11 in the food sanitary information center 10 is extremely efficient and useful.
(4) According to this system, the sanitary information managing server 11 can supply uniformalized information, which relates to the safety of the foods in the respective food factories 30, to the CVS headquarters 20 owing the food factories 30. The sanitary information managing server 11 can provide the sanitary guidance to the food factories 30 together with determination, which is prepared by the sanitary information managing server 11 based on its own criterion, or together with determination, which is prepared by the CVS headquarters 20 based on the criterion of headquarters 20.
(5) The system utilizes such an operation that each food factory 30 sends the data of inspection results to the sanitary information managing server 11, and thereby the sanitary information managing server 11 estimates the degree of consumption of the consumables of the measuring device 31. Therefore, the food factories 30 are not required to manage the consumables of the measuring device 31 by itself, and can determine the timing of required replacement of the consumables from the information provided from the sanitary information managing server 11.

Since the sanitary information managing server 11 provides the guidance to replace appropriately the consumables of the measuring devices 31 in the respective food factories 30, this ensures the safety of the food handled by each food factory 30.

### [Other Embodiments]

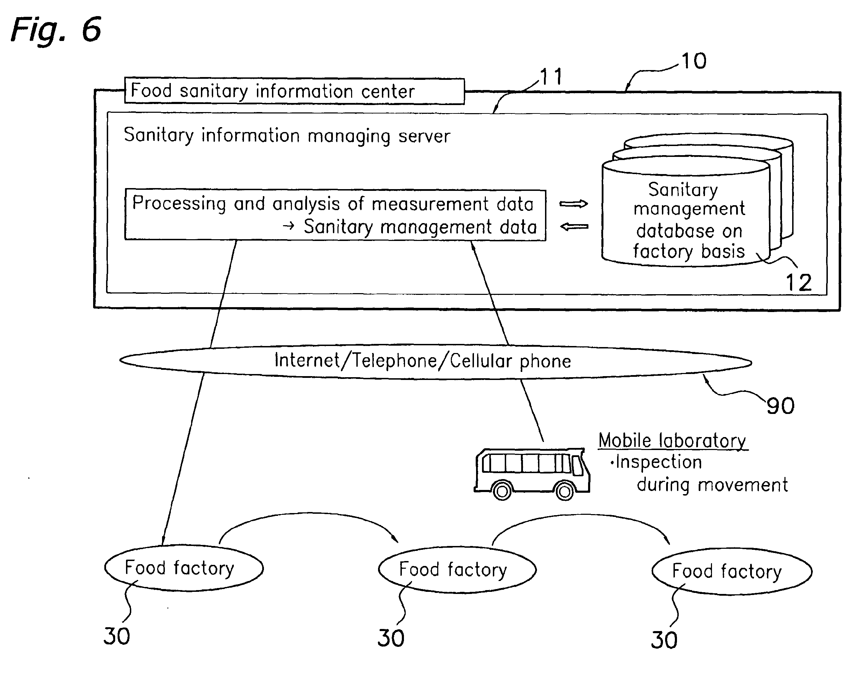

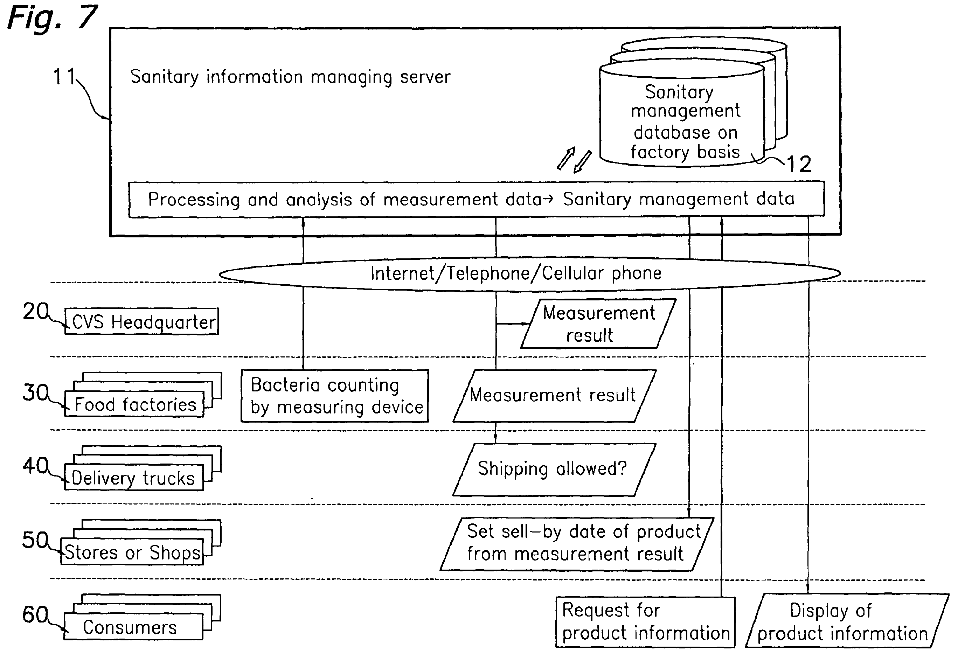

(A) According to the system of the above embodiment, the measuring device 31 arranged in each food factory 30 counts the bacteria in the food, and the sanitary information managing server 11 centralizes the data of inspection results provided from the measuring device 31, and thereby perform the maintenance management and information provision. However, another measuring device may be added to the measuring device 31, or may be employed instead of the measuring device 31. The device for such addition or replacement may be a measuring device measuring a degree of freshness of food, a device measuring a degree of washing or cleaning of food and/or processing devices, a device measuring a degree of clarification of industrial wastewater, or a device performing various kinds of sanitary inspection in the food or the factory.
   In connection with the results of sanitary inspection conducted on workers in the food factories 30, the sanitary information management server 11 may prepare a database for performing management and determination by the food sanitary information center 10.
(B) In the embodiment already described, the system is employed for the CVS headquarters 20 and the food factories 30 of the convenience store chain. However, the system can be applied to a supermarket chain or a restaurant chain, and thus to another chain company related to food sales having a plurality of food factories, and thereby can achieve extremely large effects. In particular, this system can be effectively employed in the case where the processed foods contain raw materials or half-processed materials, because the food sanitary information center can collectively manage and determine the results of sanitary inspection of the respective food factories.
(C) According to the above embodiment, each food factory 30 includes the measuring device 31 in principle. For the food factories 30 of small and medium scales, however, it may be expensive and therefore difficult to provide the measuring device 31 dedicated to the individual food factory 30. In this case, another manner may be employed.
   For example, the food factories 30 of a large scale employs and manages the measuring device 31 and inspectors by its own efforts. In the food factories 30 of a medium scale, the measuring device 31 is employed and managed by its own efforts, but the inspection is performed by an inspector coming from the food sanitary information center 10 or the like. In the food factories 30 of a small scale, the inspection is performed by the measuring device 31, which is mounted on a car 91 coming from the food sanitary information center 10 or the like, and is operated by an operator coming from the center 10 or the like. As shown in Fig. 6, the car 91 carrying the measuring device 31 visits the small food factories 30. The measuring device 31 obtains the specimens from the food factories 30, and performs the inspection during movement to or from the factory 30. When the results of inspection are obtained, the data is sent from the car 91 to the sanitary information managing server 11, e.g., over a cellular phone and the Internet.
   By performing the inspection operations for the medium and small food factories 30, the medium and small food factories 30 can ensure the safety of foods with relatively small loads.
(D) According to the system of the embodiment described above, the sanitary information managing server 11 provides the information to the CVS headquarters 20 and the respective food factories 30. However, the system may be expanded such that the information can be provided to the stores 50 of the convenience store chain, consumers 60, delivery trucks 40 delivering the processed foods from the food factories 30 to the stores 50 (Fig. 7).

For example, the sanitary information managing server 11 checks the data of the sanitary inspection in the food factories 30, and the information relating to the allowance or prohibition of delivery may be provided to the delivery truck 40 based on the results of such checking.

Based on the analysis of the sanitary inspection data by the sanitary information managing server 11, information of sell-by date, which may be used for advancing the sell-by date, may be provided to the stores 50.

A terminal arranged in each store 50 or a terminal of the consumer 60 may be used to access the web pages managed by the sanitary information managing server 11 so that the consumer 60 can obtain the sanitary information of the products, e.g., by entering a product ID. For example, the sanitary information managing server 11 may assign sanitary level information such as "AAA" or "AAB" to the products, and such information may be open to the consumers 60.

Labels attached to the products such as lunch packages may bear the sanitary information in addition to the information of the date and time of production as well as the name of the processor or the like. In this case, the sanitary information may be added to a product master file of a POS system used in the stores 50, and may be collectively managed together with other product information.

### (Industrial Applicability)

By utilizing the invention, it is possible to reduce the loads imposed on the operations such as sanitary inspection and management of the sanitary information formed of results of such inspection, which are conventionally performed in each individual food factory. Since the sanitary information managing computer centralizes the sanitary information of the respective food factories, the sanitary information managing computer can manage the sanitary information and determine the results of the sanitary inspection, instead of the management of the sanitary information and determination of results of such inspection by each individual food factory. Therefore, the operations such as management and determination of the sanitary inspection results can be efficiently performed.

## Claims

1. A sanitary measurement system for registering a plurality of food factories (30), managing sanitary information obtained from said food factories (30) and effectively utilizing the sanitary information, comprising:
a sanitary information managing computer (11); and
a sanitary inspection device (31) performing sanitary inspection in each of said food factories (30), and sending sanitary information formed of a result of the inspection to said sanitary information managing computer (11).

2. The sanitary measurement system according to claim 1, wherein
said sanitary information managing computer (11) is connected to said sanitary inspection device (31) over the Internet (90).

3. The sanitary measurement system according to claim 1 or 2, wherein
said sanitary information is results of sanitary inspection of products handled in said food factory (30), and
said sanitary information managing computer (11) manages said sanitary information by storing said sanitary information at least in a database (12) created on a factory-by-factory basis related to said food factories (30), a database (13) created on a product-by-product basis and a database (14) prepared on a material-by-material basis related to food materials contained in said products.

4. The sanitary measurement system according to claim 3, wherein
said sanitary information managing computer (11) provides sanitary information data in said database (12, •••) to said food factories (30).

5. The sanitary measurement system according to claim 4, wherein
said sanitary information managing computer (11) analyzes said sanitary information data in said database (12, •••) to provide results of the analysis to said food factories (30).

6. The sanitary measurement system according to claim 4 or 5, wherein
at least some of said food factories (30) belong to a food-sales company (20), and
said sanitary information managing computer (11) provides said sanitary information data to said food factories (30) via said food-sales company (20).

7. The sanitary measurement system according to any one of preceding claims 3 to 6, wherein
at least some of said food factories (30) belong to a food-sales company (20) having a plurality of stores (50), and
said sanitary information managing computer (11) informs said food factories (30) of whether said products can be shipped to said stores (50) or not.

8. The sanitary measurement system according to claim 4 or 5, wherein
at least some of said food factories (30) belong to a food-sales company (20) owning a plurality of stores (50), and
said sanitary information managing computer (11) further provides said sanitary information relating to said products to said stores (50).

9. The sanitary measurement system according to any one of preceding claims 3 to 8, wherein
said sanitary information managing computer (11) has databases (14, 15) including said sanitary information and created on the food material-by-food material basis and on a cooking method-by-cooking method basis, and provides the data required for product development or trial production to said food factories (30).

10. The sanitary measurement system according to any one of preceding claims 1 to 9, wherein
said sanitary information managing computer (11) estimates a degree of consumption of consumables of said sanitary inspection device (31) based on said sanitary information provided from said sanitary inspection device (31) in said food factories (30), and advises said food factories (30) to order said consumables.
